# EUROPÄISCHE PATENTSCHRIFT

(11) **EP 0 669 218 B1**
(45) Veröffentlichungstag und Bekanntmachung des Hinweises auf die Patenterteilung: **04.06.1997**
(21) Anmeldenummer: 95102403.3
(22) Anmeldetag: 21.02.1995
(51) Int. Cl.: B60J 7/053

(54) **Führungskulisse für Schiebedeckel an Schiebehebedachkonstruktionen für Kraftfahrzeuge**
Guiding groove for sliding panel in a sliding tilting roof device for motorvehicle
Coulisse de guidage de panneau coulissant pour un assemblage de toit coulissant-basculant pour véhicule automobile

(30) Priorität: 23.02.1994 DE 4405742
(43) Veröffentlichungstag der Anmeldung: 30.08.1995
(73) Patentinhaber: Peter Wahl GmbH & Co., 97892 Kreuzwertheim (DE); Rockwell International GmbH, 60314 Frankfurt (DE)
(72) Erfinder: Wahl, Peter, D-97892 Kreuzwertheim (DE); Ackermann, Rudolf, D-63073 Offenbach (DE)
(74) Vertreter: Oppermann, Ewald, Dipl.-Ing.

(56) Entgegenhaltungen:
- EP-A- 0 218 890
- DE-U- 9 116 421
- GB-A- 2 133 460

## Beschreibung

Die Erfindung bezieht sich auf eine Führungskulisse entsprechend dem Oberbegriff des Patentanspruchs 1. Unter der Bezeichnung "Schiebehebedachkonstruktion" sollen hier alle Dachkonstruktionen, auch einfache vorn scharnierte schwenkbare Lüftungsklappen, verstanden werden, deren Dachausschnitten zugeordnete Deckel über daran befestigte Führungskulissen zur Erzielung von Deckelbewegungen angetrieben werden.

Bei einem bekannten Schiebedach (DE-A-16 05 960) mit Führungskulissen entsprechend der angegebenen Gattung sind die Kulissenkörper als Flachstäbe aus abriebfestem Kunststoff, z.B. Poly-ε-Caprolaktam, ausgebildet. Die der Bewegungssteuerung dienenden Führungsschlitze sind in den Kulissenkörpern langgestreckt und entsprechend der gewünschten Deckelbewegungscharakteristik aus unterschiedlich gerichteten Schlitzabschnitten zusammengesetzt. Da über die in die Führungsschlitze eingreifenden Führungsstifte erhebliche Kräfte auf die Kulissenkörper zur Einwirkung gelangen können, müssen diese aus Festigkeitsgründen entsprechend groß dimensioniert werden, insbesondere wenn die Führungsschlitze über die Materialdicke der Kulissenkörper durchgehend ausgebildet sind und/oder im Interesse einer geringen Bauhöhe der Führungskulissen und der Schiebehebedachkonstruktion in unmittelbarer Nähe von Außenkanten der Kulissenkörper verlaufen sollen.

Um die aus Festigkeits- und Beanspruchungsgründen relativ dick bemessenen Kulissenkörper, insbesondere in der Baubreite, zu reduzieren, ist auch schon vorgeschlagen worden (DE-U-91 16 421.4), den Kulissenkörper von einem Blechteil zu bilden und nur die Führungsbahnen der Kulissenschlitze aus Kunststoff auszubilden. Vorzugsweise wird hierbei der Kunststoff auf den entsprechend größer bemessenen Kulissenschlitz im Blechteil zur Auskleidung aufgespritzt. Alternativ wird vorgeschlagen, als Kunststofführungsbahn des Kulissenschlitzes ein Kunststoffspritzteil im Bereich des Kulissenschlitzes auf die Kulisse aufzustecken. Wird die Führungsbahn als Kunststoffauskleidung auf den Kulissenschlitz im Blechteil aufgespritzt, wird zur Herstellung einer linken und einer rechten Führungskulisse jeweils ein anderes Spritzwerkzeug erforderlich. Weiterhin sind zusätzliche Einlegevorgänge von Hand auszuführen. Unterschiedliche Spritzwerkzeuge sind auch dann erforderlich, wenn die Kunststofführungsbahnen zunächst als separate Spritzteile zum späteren Aufstecken hergestellt werden. Schließlich sind auch bei dieser bekannten Führungskulisse die Blechteile durch Abkantungen und Anbringung von einseitig vorstehenden Befestigungsteilen für Rechts- und Linksverwendung unterschiedlich ausgebildet.

Der Erfindung liegt die Aufgabe zugrunde, eine Führungskulisse nach dem Oberbegriff des Anspruchs 1 so auszubilden, daß sie bei kleinen Abmessungen in Höhe und Breite eine große Formstabilität unter allen im Betrieb der Schiebehebedachkonstruktion auftretenden Belastungen aufweist, sich kostengünstig herstellen läßt und ohne weiteres für Rechts- und Linksverwendung geeignet ist.

Die gestellte Aufgabe wird durch die kennzeichnenden Merkmale des Anspruchs 1 gelöst. Vorteilhafte Weiterbildungen der Erfindung sind in den Unteransprüchen 2 bis 10 angegeben und nachstehend ebenfalls erläutert.

Entsprechend dem Erfindungsgedanken ist die Führungskulisse als sandwichartiges Paket aus mindestens einer Verstärkungsplatte und dem Kunststoff-Kulissenkörper aufgebaut. Aufgrund dieser Ausbildung ist die Führungskulisse trotz möglicher geringer Abmessungen in Höhe und Breite sehr belastbar, wobei die mindestens eine Verstärkungsplatte auch bei eng an Außenkanten des Kulissenkörpers befindlichen Abschnitten des Führungsschlitzes dafür sorgt, daß der Führungsschlitz durch über den Führungsstift eingeleitete Kräfte nicht unter Zunahme der Schlitzweite aufgebogen werden kann. Da sowohl der Kulissenkörper als auch die mindestens eine Verstärkungsplatte plattenförmig ebene Gebilde sind, läßt sich die Führungskulisse kostengünstig herstellen und gleichermaßen rechts wie links verwenden.

Vorzugsweise ist die Führungskulisse wie im Anspruch 2 angegeben ausgebildet. Durch die beiderseits des Kulissenkörpers angebrachten Verstärkungsplatten aus gestanztem Blech erhält das dreischichtige sandwichartige Paket eine hohe Festigkeit, so daß auch die Materialdicke des in der Mitte des Pakets befindlichen Kunststoff-Kulissenkörpers verhältnismäßig gering sein kann, zumal dies nicht auf Kosten der Führungsbahnbreite der Führungsschlitze geht, denn die Breite der Randvorsprünge ist der Führungsbahnbreite hinzuzurechnen. Diese beiden seitlichen Führungsbahnabschnitte in den Randvorsprüngen sind voll für Führungsaufgaben heranziehbar, weil die Randvorsprünge von aussen durch die ihnen anliegenden Schlitzwände der Schlitze in den Verstärkungsplatten abgestützt sind. Durch den engen Eingriff zwischen den Randvorsprüngen des Kulissenkörpers und den Schlitzen in den Verstärkungsplatten wird zugleich eine gute Zentrierwirkung für die Verstärkungsplatten an dem Kulissenkörper erzielt. Vorteilhaft ist dabei die im Anspruch 3 angegebene Klemmausbildung der Randvorsprünge und der Schlitze.

Der Grundgedanke des Eingreifens von Vorsprüngen des Kunststoff-Kulissenkörpers in entsprechende Aussparungen der Verstärkungsplatten gelangt durch die Merkmale des Anspruchs 4 auch auf Befestigungsbohrungen und Lagerbohrungen der Führungskulisse zur Anwendung. Dadurch wird die Verklammerung der drei unterschiedlichen Werkstoffschichten der Führungskulisse und deren gegenseitige Zentrierung noch weiter verbessert. Entsprechend Anspruch 5 kann hierbei die Ausbildung der Ringvorsprünge und der durch die Führungskulisse geführten Bohrungen analog den Randvorsprüngen und den Führungsbahnen an den Führungsschlitzen ausgeführt sein.

Wie aus Anspruch 6 hervorgeht, kann es zweckmäßig sein, daß der Kunststoff-Kulissenkörper im Bereich von Lagerstellen der Führungskulisse so ausgespart ist, daß die Lagerausbildung ausschließlich unter Verwendung der über den Kulissenkörper überstehenden Bereiche der Verstärkungsplatt£ bzw. der Verstärkungsplatten erfolgt.

Zum Ausgleich von Ausrichtungsfehlern zwischen den Führungsbahnen der Führungsschlitze und den Führungsstiften können die Führungsbahnen vorteilhaft entsprechend Anspruch 7 ballig ausgeführt sein.

Die im Anspruch 8 angegebenen Merkmale sorgen zusätzlich für eine Zentrierung der Verstärkungsplatten an dem Kulissenkörper, wobei die dafür vorgesehenen Zentrierzapfen des Kulissenkörpers gleichzeitig zur Befestigung der Verstärkungsplatten an dem Zentrierkörper herangezogen werden können, beispielsweise durch thermische nietartige Verformung der Zentrierzapfen in den zugehörigen Aufnahmebohrungen in den Verstärkungsplatten.

Der Kulissenkörper und die Verstärkungsplatten können entsprechend Anspruch 9 ganzflächig zu einer einteiligen Verbundplatte vereinigt sein, beispielsweise durch Ultraschallschweißen, Kleben oder Nieten.

Für die Herstellung des Kulissenkörpers und seiner damit einstückigen Vorsprünge sind die im Anspruch 10 angegebenen thermoplastischen Kunststoffe besonders gut geeignet.

Weitere Einzelheiten der Erfindung werden nachfolgend anhand der das bevorzugte Ausführungsbeispiel der Führungskulisse darstellenden Zeichnungen näher erläutert. Darin zeigt:
- Fig. 1: einen Längsschnitt durch eine Schiebehebedachkonstruktion mit nach oben mittels der Führungskulissen verschwenktem Schiebedeckel,
- Fig. 2: den Längsschnitt gemäß Fig. 1, jedoch bei in die Dachebene eingeschwenktem, d.h. geschlossenem Schiebedeckel,
- Fig. 3: eine Seitenansicht einer Führungskulisse mit abgebrochen dargestellten angeschlossenen Funktionselementen,
- Fig. 4: den Schnitt entlang der Linie IV-IV in Fig. 3,
- Fig. 5: den Schnitt entlang der Linie V-V in Fig. 3,
- Fig. 6: den Schnitt entlang der Linie VI-VI in Fig. 3,
- Fig. 7: einen der Fig. 4 ähnlichen Schnitt, der eine modifizierte Ausführungsform zeigt,
- Fig. 8: eine Seitenansicht eines Kunststoff-Kulissenkörpers,
- Fig. 9: den Schnitt entlang der Linie IX-IX in Fig. 8,
- Fig. 10: den Schnitt entlang der Linie X-X in Fig. 8,
- Fig. 11: eine Seitenansicht der einen Verstärkungsplatte,
- Fig. 12: den Schnitt entlang der Linie XII-XII in Fig. 11,
- Fig. 13: den Schnitt entlang der Linie XIII-XIII in Fig. 11,
- Fig. 14: eine zur Fig. 11 spiegelbildliche Seiteneinsicht der anderen Verstärkungsplatte,
- Fig. 15: den zu Fig. 12 spiegelbildlichen Schnitt entlang der Linie XV-XV in Fig. 14 und
- Fig. 16: den zu Fig. 13 spiegelbildlichen Schnitt entlang der Linie XVI-XVI in Fig. 14.

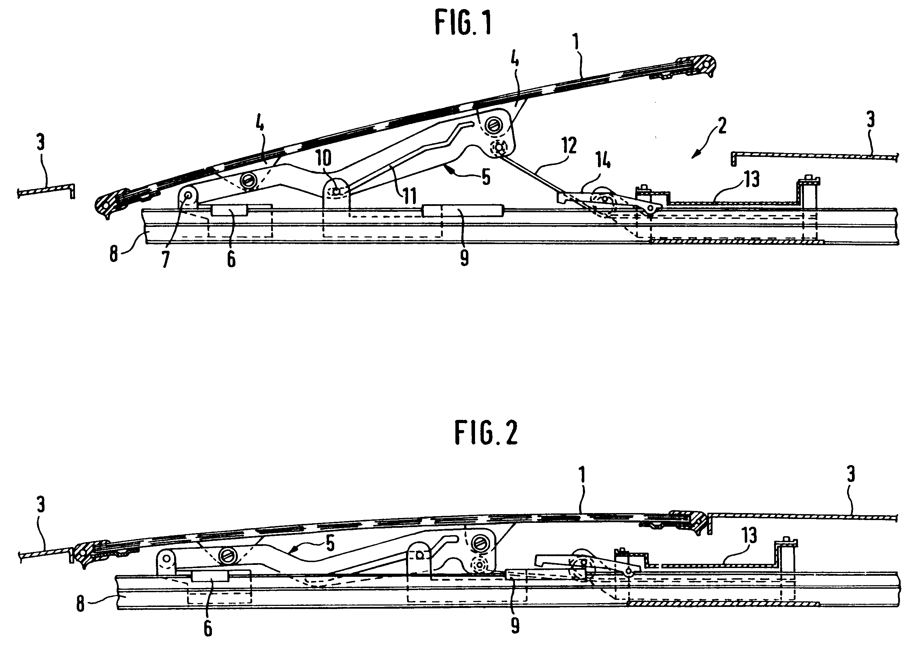

Die aus den Fig. 1 und 2 ersichtliche Schiebehebedachkonstruktion ist im gezeigten Beispiel mit einem Schiebedeckel 1 aus Glas ausgerüstet. Selbstverständlich kann der Schiebedeckel auch als Blechdeckel ausgebildet sein. Der Schiebedeckel 1 befindet sich in beiden Figuren noch innerhalb eines Dachausschnitts 2, der in dem Dachblech 3 eines Kraftfahrzeugs vorgesehen ist. In üblicher Weise kann der Schiebedeckel 1 auch aus der in Fig. 2 dargestellten Schließlage nach Absenken seiner Hinterkante unter den hinteren Bereich des Dachblechs 3 verschoben werden.

An dem Schiebedeckel 1 sind an beiden Seiten (von denen nur eine dargestellt ist) jeweils zwei voneinander beabstandete Traglaschen 4 befestigt, an denen eine langgestreckte Führungskulisse 5 angebracht ist, im gezeigten Beispiel mittels Schrauben lösbar befestigt ist. Die Führungskulisse 5 steht über die vordere Traglasche 4 über und ist dort mit einem vorderen Gleitschuh 6 über einen Lagerzapfen 7 schwenkbar verbunden. Auf der der gezeichneten Seite gegenüberliegenden Seite des Dachausschnitts 2 ist die Anordnung spiegelbildlich ausgeführt, wobei die beiden Lagerzapfen 7 auf einer gemeinsamen waagerechten und quer zur Schieberichtung verlaufenden Achse liegen. Zur Vereinfachung wird nachfolgend nur noch die aus den Fig. 1 und 2 ersichtliche, der gegenüberliegenden Anordnung spiegelbildliche Anordnung beschrieben.

Der vordere Gleitschuh 6 ist verschiebbar an einer seitlich im Dachausschnitt 2 befestigten Führungsschiene 8 geführt. Mit je nach Schwenkstellung des Schiebedeckels 1 unterschiedlichem Abstand zum vorderen Gleitschuh 6 ist ein hinterer Gleitschuh 9 ebenfalls verschiebbar an der Führungsschiene 8 geführt. An dem hinteren Gleitschuh 9 ist ein Führungsstift 10 befestigt, der in einen in der Führungskulisse 5 angebrachten Führungsschlitz 11 verschiebbar eingreift. Der Führungsschlitz 11 ist aus mehreren ineinander übergehenden Führungsschlitzabschnitten zusammengesetzt, die im Zusammenwirken mit dem Führungsstift 10 und der Stellung des hinteren Gleitschuhs 9 relativ zum vorderen Gleitschuh 6 die Bewegungen des Schiebedeckels 1 steuern.

Zu diesem Zweck greift an den hinteren Gleitschuh ein seine Verschiebung an der Führungsschiene 8 bewirkendes Antriebselement, beispielsweise in Form eines druckfest und verschiebbar an der Führungsschiene 8 geführten Gewinde-Antriebskabels (nicht dargestellt) an.

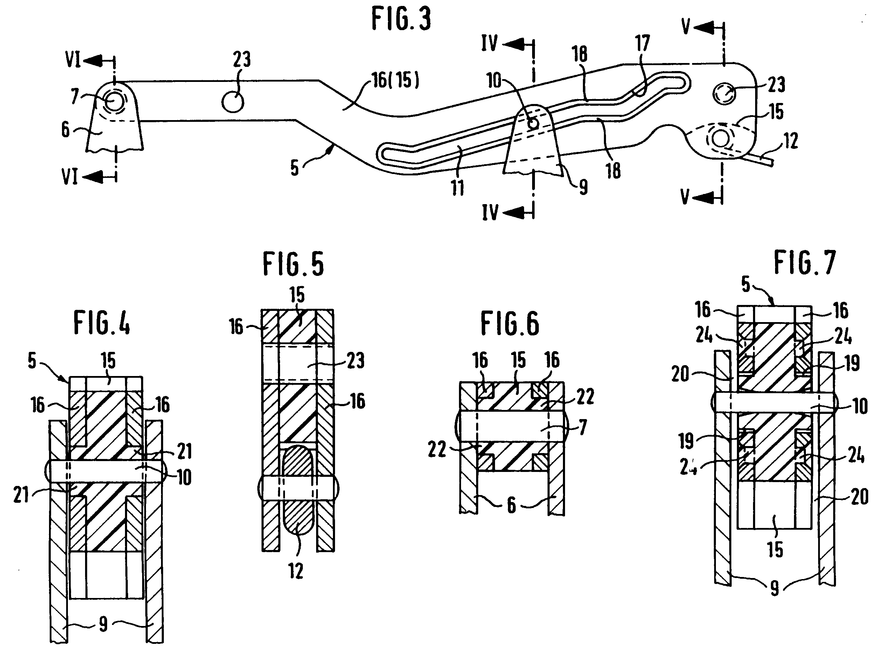

An ihrem hinteren Ende ist an die Führungskulisse 5 ein Federarm 12 angelenkt, der die Verbindung zu einer ebenfalls an der Führungsschiene 8 verschiebbaren Wasserauffangvorrichtung 13 herstellt, die sich bei ausgeschwenktem Schiebedeckel 1 (Fig. 1) und bei geschlossenem Schiebedeckel (Fig. 2) unterhalb des hinteren Randspalts zwischen dem Schiebedeckel 1 und dem Dachblech 3 befindet, um dort eintretendes Wasser aufzunehmen und seitlich abzuführen. Mit der Wasserauffangvorrichtung 13 bzw. mit dem Federarm 12 ist noch eine Sperrvorrichtung 14 verbunden, die im Zusammenwirken mit dem hinteren Gleitschuh 9 dafür sorgt, daß der Schiebedeckel beim Ausschwenken in seine in Fig. 1 gezeigte Stellung und beim Zurückschwenken in seine in Fig. 2 gezeigte Stellung nicht an der Führungsschiene 8 verschoben wird. Die bisher beschriebene Anordnung und ihre Funktion ist für Schiebehebedachkonstruktionen so üblich, daß eine nähere Erläuterung hier entbehrlich ist. Nachfolgend wird nunmehr die erfindungsgemäße Ausbildung der Führungskulisse 5 näher erläutert, wozu auf die Fig. 3 bis 16 Bezug genommen wird.

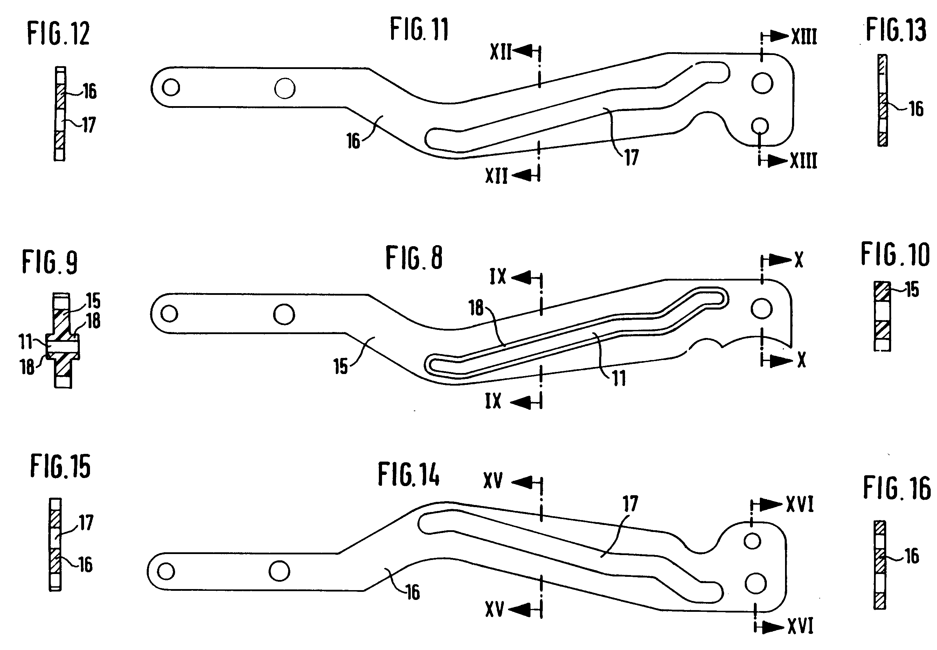

Die Führungskulisse 5 ist aus einem Kulissenkörper 15 aus einem abrieb- und druckfesten thermoplastischen Kunststoff und zwei seitlichen identischen Verstärkungsplatten 16 sandwichartig aufgebaut,- wobei der Kulissenkörper 15 und die beiden Verstärkungsplatten 16 flächig aneinanderliegen. Die Verstärkungsplatten 16 weisen übereinstimmend einen dem Führungsschlitz 11 im Kulissenkörper 15 entsprechenden, aber mit größerer Schlitzweite ausgebildeten Schlitz 17 auf, wie am besten aus den Fig. 8, 11 und 14 hervorgeht. Die Weite der Schlitze 17 ist so bemessen, daß den Führungsschlitz 11 des Kulissenkörpers 15 an beiden Seiten umgebende, nach außen aus dem Kulissenkörper 15 vorstehende Randvorsprünge 18, die mit dem Kulissenkörper 15 einteilig sind, formschlüssig aufgenommen sind. Die Stirnflächen der Randvorsprünge 18 befinden sich in der Ebene der Aussenflächen der Verstärkungsplatten 16, wie die Fig. 4 und 7 verdeutlichen. Die Außenflächen der Führungskulissen 5 sind daher glattflächig. Wie insbesondere Fig. 9 gut erkennen läßt, stimmen die nicht näher bezeichneten Innenflächen der Randvorsprünge 18 mit den Führungsbahnen des Führungsschlitzes überein, so daß auf diese Weise die Führungsbahnen von den Randvorsprüngen praktisch um die zweifache Materialdicke der Verstärkungsplatten 16 verbreitert sind.

Die Außenabmessungen der Randvorsprünge 18 können auf die Abmessungen der Schlitze 17 zur klemmenden Aufnahme der Randvorsprünge 18 in den Schlitzen 17 abgestimmt sein, wie das durch den spaltfreien Sitz der Teile in Fig. 4 veranschaulicht ist. Allerdings kann die Weite der Schlitze 17 bezüglich der den Schlitzwandungen zugekehrten Außenflächen der Randvorsprünge auch so gewählt werden, daß Spalträume 19 zwischen den Randvorsprüngen und den diesen zugekehrten Schlitzflächen der Schlitze 17 verbleiben. Diese Modifikation ist in Fig. 7 dargestellt. Fig. 7 zeigt auch, daß die Führungsbahnen der Führungsschlitze quer zur Schlitzlänge ballig ausgeführt sein können, damit zwischen den Seitenwangen des hinteren Gleitschuhs 9 und dem diese miteinander verbindenden Führungsstift 10 einerseits und der Führungskulisse 5 andererseits durch relative Kippbewegungen ein gewisser Toleranzausgleich möglich ist. Zu diesem Zweck ist dann auch die Gesamtbreite der Führungskulisse 5 geringer als das lichte Maß zwischen den Wangen des hinteren Gleitschuhs 9, so daß beiderseits der Führungskulisse 5 Abstandsräume 20 vorhanden sind.

Die Bohrungen zur Schwenklagerung des Schiebedeckels mittels des Führungsstifts 10 als auch die Bohrungen zur Aufnahme des Lagerzapfens 7 sind sowohl durch den Kulissenkörper 15 als auch durch die Verstärkungsplatten 16 geführt, wie beispielsweise aus den Fig. 4 und 6 hervorgeht. Dabei sind die Bohrungsdurchmesser in den Verstärkungsplatten 16 zur formschlüssigen Aufnahme von Ringvorsprüngen 21 bzw. 22 jeweils größer als die damit koaxialen Bohrungen in dem Kulissenkörper 15. Die Ringvorsprünge 21 und 22 umgeben die jeweils zugehörigen Bohrungen in dem Kulissenkörper 15 konzentrisch, sind mit dem Kulissenkörper 15 einteilig und springen daraus nach außen vor. Mit ihren äusseren Stirnflächen befinden sich die Ringvorsprünge 21 und 22 ähnlich wie die Randvorsprünge 18 in der Ebene der Außenflächen der Verstärkungsplatten 16, so daß auch an diesen Stellen der Führungskulisse 5 glattflächige Außenflächen gegeben sind. Die jeweiligen Bohrungen zur Aufnahme des Führungsstifts 10 und des Lagerzapfens 7 sind jeweils mit gleichbleibendem Durchmesser durch die Ringvorsprünge 21 bzw. 22 geführt.

Auf die beschriebene Weise können auch die ggf. mit Gewinde versehenen Bohrungen 23 zur Befestigung der Führungskulisse 5 am Schiebedeckel 1 mit Ringvorsprüngen versehen sein, die in entsprechende Bohrungen der Verstärkungsplatten 16 eingreifen. Diese Ausbildung ist indessen in den Zeichnungen nicht dargestellt. Fig. 5 zeigt vielmehr am Beispiel der hinteren Bohrung 23, daß die Bohrung mit gleichbleibendem Durchmesser sowohl durch die beiden Verstärkungsplatten 16 als auch durch den Kulissenkörper 15 geführt ist.

Wie am Beispiel der Anlenkstelle des Federarms 12 an der Führungskulisse 5 in den Fig. 3 und 5 dargestellt ist, können die Verstärkungsplatten 16 im Bereich von Lagerstellen über die Außenkontur des Kulissenkörpers 15 vorstehen, so daß Anlenkteile wie der Federarm 12 zwischen den Verstärkungsplatten 16 geführt sind.

Aus dem Kulissenkörper 15 können damit einteilige Zentrierzapfen 24 vorspringen, die in entsprechende Zentrierbohrungen der Verstärkungsplatten 16 eingreifen. Diese Möglichkeit ist in Fig. 7 dargestellt. Fig. 7 zeigt auch, daß die Zentrierbohrungen als Senkbohrungen ausgeführt sind, wodurch die Zentrierzapfen 24 in den Zentrierbohrungen durch Warmverformung nach Art einer Thermonietverbindung befestigt sein können.

Der Kulissenkörper 15 kann aus dem dafür ausgewählten thermoplastischen Kunststoff durch Spritzformung hergestellt sein. Bei der Spritzformung werden zugleich die Randvorsprünge 18, die Ringvorsprünge 21 und 22 sowie ggf. die Zentrierzapfen 24 angeformt.

Die Verstärkungsplatten 16 und der Kulissenkörper 15 können ganzflächig zu einer Verbundplatte aneinander befestigt sein. Hierfür eignet sich das Ultraschallschweißen, aber auch Klebeverbindungen unter Verwendung geeigneter Kleber sind möglich und ergeben eine belastbare Verbundplatte. Die Führungskulisse 5 ist zur Anbringung an beiden Seiten des Schiebedeckels 1 identisch, so daß nur eine Ausführung der Führungskulisse herzustellen, zu bevorraten und zu montieren ist. Zur Herstellung der Verbundplatte können die Verstärkungsplatten mit dem Kulissenkörper auch mittels hindurchgeführter Niete vereinigt sein.

## Patentansprüche

1. Führungskulisse zur Befestigung an jeweils einer Seitenkante eines Schiebedeckels (1) für die Verlagerung des Schiebedeckels relativ zu einem entsprechenden Dachausschnitt (2) einer Schiebehebedachkonstruktion für Kraftfahrzeuge, deren Schiebedeckel (1) mit vorderen und hinteren Gleitschuhen (6,9) seitlich im Dachausschnitt (2) geführt, durch an die hinteren Gleitschuhe (9) angreifende Antriebselemente angetrieben und an seinen vorderen Gleitschuhen (6) um eine waagerechte, quer zur Schieberichtung verlaufende Achse schwenkbar gelagert ist, wobei die Antriebsübertragung durch an den hinteren Gleitschuhen (9) befestigte, in Führungsschlitze (11) der aus einem abriebfesten Kunststoff als Flachstäbe geformten Kulissenkörpern eingreifende Führungsstifte (10) erfolgt, **dadurch gekennzeichnet**, daß dem Kulissenkörper (15) mindestens an einer seiner Seitenflächen eine verstärkungsplatte (16) flächig anliegt, die einen dem Führungsschlitz (11) entsprechenden, aber mit größerer Schlitzweite ausgebildeten Schlitz (17) aufweist, in den ein den Führungsschlitz (11) des Kulissenkörpers (15) umgebender, nach außen aus dem Kulissenkörper (15) vorstehender und damit einteiliger Randvorsprung (18) formschlüssig aufgenommen ist.

2. Führungskulisse nach Anspruch 1, **dadurch gekennzeichnet**, daß beiden Seitenflächen des Kulissenkörpers (15) übereinstimmende, als Blechstanzteile ausgebildete Verstärkungsplatten (16) ganzflächig anliegen, in deren Schlitze (17) auf beiden Seiten nach außen aus dem Kulissenkörper (15) vorstehende übereinstimmende Randvorsprünge (18) formschlüssig aufgenommen sind, deren Stirnflächen sich in der Ebene der Außenflächen der Verstärkungsplatten (16) befinden und deren Innenflächen mit den Führungsbahnen der Führungsschlitze (11) übereinstimmen und diese verbreitern.

3. Führungskulisse nach Anspruch 1 oder 2, **dadurch gekennzeichnet**, daß die Außenabmessungen der Randvorsprünge (18) auf die Abmessungen der Schlitze (17) zur klemmenden Aufnahme der Randvorsprünge (18) in den Schlitzen (17) abgestimmt sind.

4. Führungskulisse nach mindestens einem der Ansprüche 1 bis 3, **dadurch gekennzeichnet**, daß Bohrungen zur Befestigung der Führungskulisse (5) am Schiebedeckel (1) und zur Schwenklagerung des Schiebedeckels sowohl durch den Kulissenkörper (15) als auch durch die Verstärkungsplatte bzw. Verstärkungsplatten (16) geführt sind, daß der Bohrungsdurchmesser in den Verstärkungsplatten (16) zur formschlüssigen Aufnahme von Ringvorsprüngen (21, 22) größer ist als die koaxialen Bohrungen in dem Kulissenkörper (15) und daß die Ringvorsprünge (21, 22) die Bohrungen in dem Kulissenkörper (15) konzentrisch umgeben, mit dem Kulissenkörper (15) einteilig sind und daraus nach außen vorspringen.

5. Führungskulisse nach Anspruch 4, **dadurch gekennzeichnet**, daß sich die Stirnflächen der Ringvorsprünge (21, 22) in der Ebene der Außenflächen der Verstärkungsplatten (16) befinden und daß die Bohrungen des Kulissenkörpers (15) mit gleichbleibendem Durchmesser durch die Ringvorsprünge (21, 22) geführt sind.

6. Führungskulisse nach mindestens einem der Ansprüche 1 bis 5, **dadurch gekennzeichnet**, daß die Verstärkungsplatten (16) im Bereich von Lagerstellen über die Außenkontur des Kulissenkörpers (15) vorstehen.

7. Führungskulisse nach mindestens einem der Ansprüche 1 bis 6, **dadurch gekennzeichnet,** daß die Führungsbahnen der Führungsschlitze (11) quer zur Schlitzlänge ballig ausgeführt sind.

8. Führungskulisse nach mindestens einem der Ansprüche 1 bis 7, **dadurch gekennzeichnet**, daß aus dem Kulissenkörper (15) und damit einteilige Zentrierzapfen (24) vorspringen, die in entsprechende Zentrierbohrungen der Verstärkungsplatten (16) eingreifen und darin ggf. befestigt sind.

9. Führungskulisse nach mindestens einem der Ansprüche 1 bis 8, **dadurch gekennzeichnet**, daß der Kulissenkörper (15) und die Verstärkungsplatten (16) zu einer Verbundplatte aneinander befestigt sind.

10. Führungskulisse nach mindestens einem der Ansprüche 1 bis 9, **dadurch gekennzeichnet**, daß der Kulissenkörper (15) aus einem abrieb- und druckfesten thermoplastischen Kunststoff, ausgewählt aus der Gruppe der Polyoxymethylene, Polyamide, Polytetrafluorethylen geformt ist.

## Claims

1. Guide link for fixing to each lateral edge of a sliding lid (1) for the displacement of the sliding lid relative to a corresponding roof opening (2) of a sliding-lifting roof construction for automobiles, of which the sliding lid (1) is guided with front and rear sliding shoes (6, 9) laterally in the roof opening (2), is driven by drive elements acting on the rear sliding shoes (9) and is pivotally journalled at its front sliding shoes (6) about a horizontal axis extending transversely to the direction of sliding, wherein the drive transmission takes place through guide pins (10), fixed to the rear sliding shoes (9) and engaging into guide slits (11) of the link bodies, moulded as flat bars from a wear-resistant plastics material, characterized in that a reinforcing plate (16) bears flatly against the link body (15) at least at one of its lateral surfaces, which (reinforcing plate) possesses a slit (17), corresponding to the guide slit (11) but having a larger slit breadth, into which an edge projection (18), surrounding the guide slit (11) of the link body (15) and projecting outwardly from the link body (15) and formed in one piece with it, is form-fittingly seated.

2. Guide link according to claim 1, characterized in that identical reinforcing plates (16), formed as sheet metal stampings, bear over their entire area against both lateral faces of the link body (15), in the slits (17) of which plates identical edge projections (18), projecting outwardly on both sides from the link body (15), are form-fittingly seated, the end faces of which (projections) are situated in the plane of the outer surfaces of the reinforcing plates (16), and the inner faces of which coincide with the guide tracks of the guide slits (11) and extend them in width.

3. Guide link according to claim 1 or 2, characterized in that the external dimensions of the edge projections (18) are adapted to the dimensions of the slits (17) for the clamping seating of the edge projections (18) in the slits (17).

4. Guide link according to at least one of claims 1 to 3, characterized in that bores for fixing the guide link (5) to the sliding lid (1) and for the pivotal mounting of the sliding lid, are formed both through the link body (15) and also through the reinforcing plate or plates (16), that the bore diameter in the reinforcing plates (16) for the form-fitting seating of annular projections (21, 22) is greater than the coaxial bores in the link body (15), and that the annular projections (21, 22) concentrically surround the bores in the link body (15), are in one piece with the link body (15) and project outwardly from it.

5. Guide link according to claim 4, characterized in that the end faces of the annular projections (21, 22) lie in the plane of the outer faces of the reinforcing plates (16) and that the bores of the link body (15) are continued with constant diameter through the annular projections (21, 22).

6. Guide link according to at least one of claims 1 to 5, characterized in that the reinforcing plates (16) project in the region of the bearing positions beyond the outer contour of the link body (15).

7. Guide link according to at least one of claims 1 to 6, characterized in that the guide tracks of the guide slits (11) are shaped convex transversely to the slit length.

8. Guide link according to at least one of claims 1 to 7, characterized in that centering trunnions (24) integral with the link body (15) project out of it, which engage into corresponding centering bores of the reinforcing plates (16) and if desired are fixed therein.

9. Guide link according to at least one of claims 1 to 8, characterized in that the link body (15) and the reinforcing plates (16) are fixed together to form a composite plate.

10. Guide link according to at least one of claims 1 to 9, characterized in that the link body (15) is moulded from a wear-resistant and pressure-resistant, thermoplastics material, chosen from the group of the polyoxymethylenes, polyamides, and polytetrafluorethylene.

## Revendications

1. Coulisse de guidage destinée à être fixée sur un bord latéral respectif d'un couvercle coulissant (1) servant au déplacement du couvercle coulissant par rapport à une découpe de toit (2) correspondante d'une construction de toit ouvrant coulissant/relevable pour véhicule, dont le couvercle coulissant (1) est guidé latéralement dans la découpe de toit (2) avec des patins de guidage antérieurs et postérieurs (6, 9), est entraîné par des éléments d'entraînement attaquant les patins de guidage postérieurs (9), et est monté à basculement autour d'un axe horizontal monté transversalement à la direction de coulissement, la transmission de l'entraînement étant produite grâce à des goupilles de guidage (10) fixées sur les patins de guidage postérieurs (9), s'engageant dans des fentes de guidage (11) des corps de coulisse en forme de barres plates, réalisés en matière plastique résistante à l'abrasion, caractérisée en ce qu'une plaque de renforcement (16) repose à plat au moins sur une des surfaces latérales du corps de coulisse, ladite plaque de renforcement présentant une fente (17) correspondant à la fente de guidage (11) mais avec une plus grande largeur de fente, dans laquelle est reçue par coopération de formes une saillie de bord (18) entourant la fente de guidage (11) du corps de coulisse (15), faisant saillie vers l'extérieur hors du corps de coulisse (15) et formée d'une seule pièce avec celui-ci.

2. Coulisse de guidage selon la revendication 1, caractérisée en ce que des plaques de renforcement (16) correspondant aux deux surfaces latérales du corps de coulisse (15) et réalisées sous forme de tôles découpées reposent sur toute leur surface, dans les fentes (17) desquelles des saillies de bord (18) correspondantes, faisant saillie des deux côtés vers l'extérieur hors du corps de coulisse (15), sont reçues par coopération de formes, les faces frontales desdites saillies de bord se trouvant dans le plan des faces extérieures des plaques de renforcement (16) et leurs faces intérieures correspondant aux glissières des fentes de guidage (11) et élargissant celles-ci.

3. Coulisse de guidage selon l'une ou l'autre des revendications 1 et 2, caractérisée en ce que les dimensions extérieures des saillies de bord (18) sont adaptées aux dimensions des fentes (17) pour recevoir par serrage les saillies de bord (18) dans les fentes (17).

4. Coulisse de guidage selon au moins l'une quelconque des revendications 1 à 3, caractérisée en ce que des perçages sont menés non seulement à travers le corps de coulisse (15), mais aussi à travers la ou les plaques de renforcement (16) pour fixer la coulisse de guidage (5) sur le couvercle coulissant (1) et pour monter à basculement le couvercle coulissant, en ce que le diamètre des perçages ménagés dans les plaques de renforcement (16) pour recevoir par coopération de formes des saillies annulaires (21, 22) est supérieur à celui des perçages coaxiaux ménagés dans le corps de coulisse (15), et en ce que les saillies annulaires (21, 22) entourent les perçages dans le corps de coulisse (15) de manière concentrique, qu'elles sont réalisées d'une seule pièce avec le corps de coulisse (15) et qu'elles font saillie hors de celui-ci vers l'extérieur.

5. Coulisse de guidage selon la revendication 4, caractérisée en ce que les faces frontales des saillies annulaires (21, 22) se trouvent dans le plan des faces extérieures des plaques de renforcement (16) et en ce que les perçages du corps de coulisse (15) sont menés à travers les saillies annulaires (21, 22) avec un diamètre constant.

6. Coulisse de guidage selon au moins une quelconque des revendications 1 à 5, caractérisée en ce que les plaques de renforcement (16) font saillie dans la région de paliers au-delà du contour extérieur du corps de coulisse (15).

7. Coulisse de guidage selon au moins une quelconque des revendications 1 à 6, caractérisée en ce que les glissières des fentes de guidage (11) sont réalisées bombées transversalement à la longueur des fentes.

8. Coulisse de guidage selon au moins une quelconque des revendications 1 à 7, caractérisée en ce que des tenons de centrage (24) réalisés d'une seule pièce avec le corps de coulisse (15) font saillie hors de celui-ci et s'engagent dans des perçages de centrage correspondants des plaques de renforcement (16) et y sont fixés le cas échéant.

9. Coulisse de guidage selon au moins une quelconque des revendications 1 à 8, caractérisée en ce que le corps de coulisse (15) et les plaques de renforcement (16) sont fixés les uns aux autres pour former une plaque composite.

10. Coulisse de guidage selon au moins une quelconque des revendications 1 à 9, caractérisée en ce que le corps de coulisse (15) est formé à partir d'une matière plastique thermoplastique résistante à l'abrasion et à la pression, choisie dans le groupe formé par les polyoxyméthylènes, les polyamides et les polytétrafluoroéthylènes.
